(19) Europäisches Patentamt
European Patent Office
Office européen des brevets

(11) **EP 1 087 024 B1**

(12) **EUROPEAN PATENT SPECIFICATION**

(45) Date of publication and mention
of the grant of the patent:
**16.06.2004 Bulletin 2004/25**

(51) Int Cl.7: **C21C 5/52**, C21C 5/54

(21) Application number: **00120498.1**

(22) Date of filing: **20.09.2000**

(54) **A method and equipment for slag foaming**

Verfahren und Vorrichtung zur Erzeugung von Schlackenschaum

Procédé et installation pour moussage de scories

(84) Designated Contracting States:
**BE DE FR GB IT SE**

(30) Priority: **24.09.1999 NO 994636**

(43) Date of publication of application:
**28.03.2001 Bulletin 2001/13**

(73) Proprietor: **NORSK HYDRO ASA**
**0240 Oslo (NO)**

(72) Inventors:
• **Engh, Thorvald**
**7027 Trondheim (NO)**

• **Roaas, Stig**
**3970 Langesund (NO)**
• **Haukeli, Sigurd**
**0654 Oslo (NO)**

(74) Representative: **Bleukx, Lucas Lodewijk M.**
**Bleukx Consultancy BVBA**
**Rijksweg 237**
**3650 Dilsen-Stokkem (BE)**

(56) References cited:
**DE-A- 19 608 530**     **US-A- 4 089 678**
**US-A- 5 343 491**

**Description**

The present invention concerns a method and equipment for the formation/maintenance of foam in a process. The present invention relates in particular to metallurgical processes which are carried out at high temperatures.

A slag layer may be formed on the surface of the molten metal in connection with the treatment of metal, for example steel in an arc furnace. The quality of the slag layer will depend, among other things, on any impurities and additives in the smelted metal.

Steel producers have recently tried to foam the slag layer as this can produce process-related advantages. A foamed slag layer will sustain better insulating properties, which means less heat loss from the arc furnace and less thermal stress and consumption of linings in the upper parts of the furnace. The latter will mean less shutdown of and repair work on the furnace. A reduction in heat loss will further reduce energy consumption and the time consumption between tappings will be less. A foamed slag layer can also contribute to reduced specific electrode consumption and reduce the quantity of dust which accompanies the exhaust gases from the furnace to the purification plant. Moreover, the noise from the furnace is reduced and the working environment is improved.

The reference "Richard Mader, Peter Hoffmann, Wilfried Stein, Karl Stein, Fachbereite Hüttenpraxis Metallweiterverarbeitung, Vol. 25, No. 1,1987, pages 16-17" concerns foaming of the slag layer in connection with arc furnaces. Lime, dolomite and bauxite are described as slag formers in the reference. The reference describes the addition of carbon and oxygen to the melt to release CO, which will result in the slag being foamed above the melt. Moreover, it describes equipment for blowing in foam-forming carbon under the slag layer in the furnace using a lance. It also describes equipment for dosing lime through several openings in a cover in the arc furnace.

DE 196 08 530 C2 describes the use of $CO_2$ as a carrier gas for the addition of solids to the underside of a slag surface in an arc furnace to foam the slag. The solids may consist of, among other things, iron or ferriferous particles, carbon or carbon containing waste.

The addition of foam-forming materials commonly entails the need for subsequent treatment of the melt to remove them, possibly the addition of ferrosilicon. Among other things, the addition of carbon and oxygen to ferroalloys containing chromium for foam formation in the slag layer will entail the melt being tapped of the alloy element chromium as this will form chromium oxide in the slag layer.

The present invention is based on the addition of a foaming agent which will involve that subsequent treatment of the melt/slag on account of the foaming agent becomes less necessary. The performance of the present invention is based on solid carbon dioxide (dry ice) being added to the slag/melt, where it sublimates.

Dry ice sublimates at sufficiently high temperatures (higher than approximately -78°C at atmospheric pressure). $CO_2$ gas is formed in the sublimation process. In tests, it has been shown that the sublimation of dry ice will be relatively slow even at much higher temperatures, such as those in a slag layer. This can be explained by the fact that, under given conditions, the sublimation gas forms an insulating layer around the surface of the dry ice.

By injecting dry ice particles into a slag layer or to an area located directly beneath it, it is possible to produce a large number of bubbles per particle. This will depend on kinetics, flow conditions and wetting conditions. When dry ice particles are blown in by the use of a carrier gas, the particles will penetrate the slag layer, depending, among other things, on the particle size and the gas flow rate. $CO_2$ gas can preferably be used as the carrier gas. Dry ice may be injected directly into the slag layer.

A theoretical study has been carried out to illustrate how much a dry ice particle will be reduced by sublimation before it enters the slag layer, i.e. during transport to the slag. The dry ice is blown in using a nozzle or lance. The equipment may mainly be equivalent to that which is currently used to add carbon particles using a carrier gas (air), with the necessary adjustments for handling a cryogenic agent.

The penetration efficiency $\eta_\rho$ is defined as the proportion of particles which penetrate the interface between gas and liquid. With reference to "Langberg, D. E., Avery, S., and Nilmani, M. (1996), The separation of the Solids from the Carrier Gas during Submerged Powder Injection, Metallurgical and Materials, Trans., Vol. 27B, Oct., pp 773-779", the penetration efficiency can be expressed as:

$$\eta_\rho = 1 - F_{st}/F_m = 1 - \pi\sigma D/(m_\rho U_\rho)$$

where $D$ is the nozzle/lance diameter, $m_\rho$ is the mass transfer of solid particles and $U_\rho$ is the velocity of the particles. $F_{st}$ is the surface tension, $F_m$ is the mass velocity of the particles and $\sigma$ is the interfacial tension.

The equation is valid when Weber's number, $We = (m_\rho U_\rho)/(\sigma D)$, is greater than $\pi$.

When injecting particles into a slag layer, it must be expected that the wetting conditions are complex. However, it can roughly be assumed that a is in the order of 1 $N/m$, in accordance with which the above equations can be used. In this example, the following can be used as a basis:

$$m_\rho = 10 \ kg/s$$

$$U_\rho = 50 \ m/s$$

$$D = 0.02 \ m$$

It has been observed that $\eta_\rho$ is very close to 1 so that all the particles will probably penetrate the slag. Even for particles at a velocity as low as 0.06 m/s, the efficiency is still as high as 0.9. For a mass transfer of $m_\rho = 2 \ kg/s$, the efficiency is 0.9 at a particle velocity of 0.31 m/s.

A theoretical study has also been carried out to confirm that the dry ice particles "survive" the pneumatic transfer into the slag:

When a spherical dry ice particle sublimates, the reduction in radius r can be found from the heat balance:

$$-L\rho_s dr/dt = h(T_g - T_s).$$

Where $L$ is the enthalpy for the sublimation per mol, $h$ is a coefficient which indicates the heat transfer, $T_g$ is the gas temperature and $T_s$ is the sublimation temperature, which is here set to -78°C.

$L = 25300 \ J/mol$. The molar density, $\rho_s$, can be set to 35000 $mol/m^3$.

If $T_g$ is assumed to be constant, the equation can be integrated to the following:

$$r_0 - r = h(T_g - T_s)t/L\rho_s$$

Where $r_0$ is the initial particle size. The transport time $t$ through the pneumatic transfer system with length $l$ is then:

$$t = l/U_\rho$$

If $l = 5$ m, this produces $t = 0.01 \ s$.

Moreover, with the following selected quantities:

$$r_0 = 0.003 \ m$$

$$T_g = 500°C$$

The coefficient of heat transfer can, in accordance with "Ranz, W.E., and Marshall, W.R. (1952), Evaporation from drops, Chem. Eng. Progr., Vol.48, No.3, part 1 pp141-146, No. 4, pp 173-180", be calculated on the basis of the following correlation:

$$Nu = 2 + 0.6(Re_\rho)^{0.5} * Pr^{0.33}$$

where

$$\text{Reynolds' number, } Re_\rho = 2rp_g U_r/\mu = 2 * 0.003 * 0.69 * 5/0.00022 = 94$$

Where $p_g$ is the density of the gas and $\mu$ is the viscosity. The relative velocity $U_r$ between particle and gas is here set to 5 $m/s$. This means that the velocity of the carrier gas is set to 55 $m/s$.

Moreover, Prandtl's number, $Pr = c_\rho \mu/k = 0.6$.

For Nusselt's number, this produces $Nu = h2r/k = 6.9$ or

$$h = 6.9 * 0.03/0.006 = 34.5 \ J/(m^{20}Cs)$$

thus:

$$r_0 - r = 34.5(500 + 78.5)0.01/25300 * 35000 = 0.2 * 10^{-6} \ m$$

Which means that the melting of the sphere during the transfer to the slag is approximately zero, so that the dry ice particle will meet the slag approximately with its original size.

The present invention will be described in further detail in the following using examples and figures, where:

Fig. 1    shows equipment for dosing dry ice particles into an arc furnace

Fig. 2    shows alternative equipment for dosing dry ice particles into an arc furnace

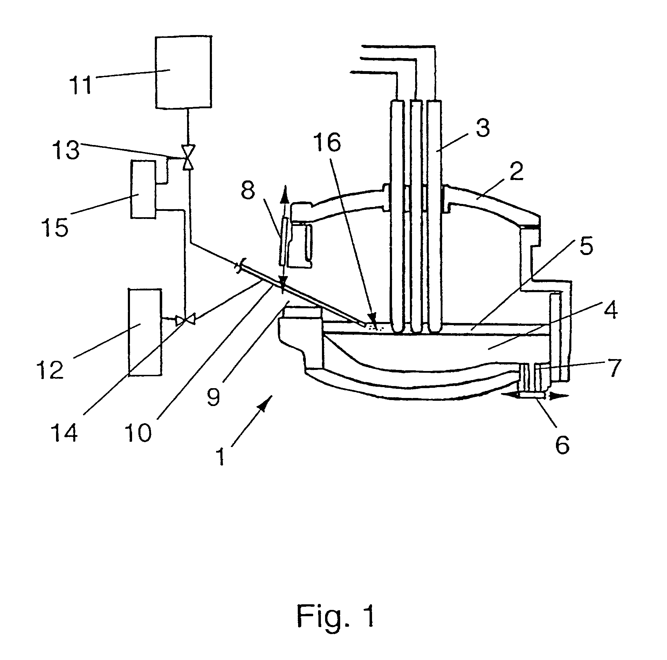

Figure 1 shows a sketch of an arc furnace 1 with a cover 2 and electrodes 3. It also shows a melt 4 and a slag layer 5. The furnace is fitted with a tapping hole 7 which is opened/closed with a valve device 6. On one side of the furnace, the figure shows an opening 9 which can be closed using a valve device 8. In the figure, the valve device 8 is in the open position and a lance 10 is inserted through the opening. The lance has equipment for dosing and feeding dry ice particles using a carrier gas. The equipment may comprise a dosing device such as a feed screw (not shown).

The equipment comprises a store 12 for dry ice particles of a selected size. The store 12 may be replaced by equipment for continuous production of particles (pellets) in the desired size and quantity (not shown). A dosing device 14 is arranged between the store 12 and lance 10 to control the supply of dry ice particles to the lance 10. The dosing device 14 can be connected to a control unit 15. A store of carrier gas 11, for example carbon dioxide gas, nitrogen, air, oxygen or a mixture of these gases is provided at the rear end of the lance. A valve device 13 is arranged between the lance and the store of carrier gas. This valve device 13 can be connected to the control unit 15.

The equipment may also comprise other means for adjusting the pressure in the carrier gas store and means for limiting any sublimation of the dry ice particles in the store 12. This lies within the competence of the man skilled in the art and is consequently not described here.

To inject dry ice particles into the slag layer/upper part of the melt, the dosing device 14 is activated and the valve 13 is opened so as to create a transfer of dry ice particles through the lance and into the slag layer/melt. With a favourable choice of dimension for the size of the dry ice particles (projected area) and the diameter of the lance (internal flow area), it will be possible to achieve the desired degree of spread of the particles so that they penetrate the slag layer like a charge of shot 16. The diameter of the lance may be considerably greater than the size of the dry ice particles.

The lance 10 may have a manipulator (not shown) which can move/adjust the lance in relation to the slag layer so that dry ice particles can be injected in all areas of the slag layer apart from those areas which are in the "shade" of the electrode(s). The angle of the lance in relation to the slag layer or the surface of the melt can be sufficiently small so that a certain agitation or turbulence is generated in the slag layer.

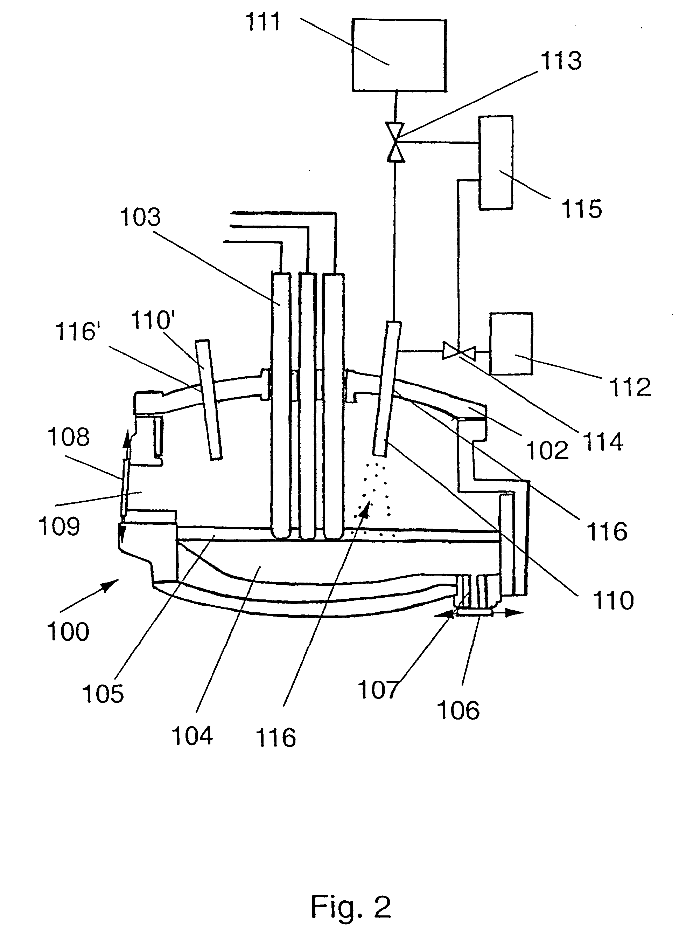

Figure 2 shows a sketch of an arc furnace 100 with a cover 102 and electrode(s) 103. It also shows a melt 104 and a slag layer 105. The furnace is fitted with a tapping hole 107 which is opened/closed with a valve device 106. On one side of the furnace, the figure shows an inspection opening 109 which can be closed using a valve device 108. The furnace also comprises openings 116, 116' in its cover 102, where lances 110, 110' are inserted. The lances have equipment for feeding dry ice particles using a carrier gas (only shown for lance 110 in the figure). In a furnace with three electrodes, the cover may expediently comprise three lances, evenly distributed in relation to the electrodes. In an embodiment not shown, the lances may have generally common equipment for feeding dry ice particles using a carrier gas. The stores for the dry ice particles and carrier gas may be common.

The equipment for feeding dry ice particles shown in Figure 2 comprises a store 112 for dry ice particles of a selected size. The store 112 may be replaced by equipment for continuous production of particles (pellets) in the desired size and quantity (not shown). A dosing device 114 is arranged between the store 112 and lance 110 to control the supply of dry ice particles to the lance 110. The dosing device 114 can be connected to a control unit 115. A store of carrier gas 111, preferably carbon dioxide gas, is provided at the rear end of the lance. As in the previous example, other gases/gas mixtures may also be used. A valve device 113 is arranged between the lance and the store of carrier gas. This valve device 113 can be connected to the control unit 115.

The equipment may also comprise other means for adjusting the pressure in the carrier gas store and means for limiting any sublimation of the dry ice particles in the store 112. This lies within the competence of the man skilled in the art and is consequently not described here.

To inject dry ice particles into the slag layer/upper part of the melt, the dosing device 114 is activated and the valve 113 is opened so as to create a transfer of dry ice particles through the lance and into the slag layer/melt. With a favourable choice of dimension for the size of the dry ice particles and the diameter of the lance, it will be possible to achieve the desired degree of spread of the particles so that they penetrate the slag layer like a charge of shot 116. The flow cross-section of the lance should be considerably greater than the projected area of the particles so that they leave the lance with a high degree of spread.

The lance 110 may have a manipulator (not shown) which can move/adjust the lance in relation to the slag layer so that the injection of the dry ice particles can cover all areas of the slag layer, possibly apart from those areas which are behind the electrodes. The angle of incidence and penetration depth of the particles can be adjusted to produce the desired agitation/turbulence in the slag layer/melt.

The number of lances used at any given time is not limited to the numbers in the two previous examples. For example, the number of lances may be fixed on the basis of requirements for the foaming and the distribution of foaming in the slag.

The present invention may be adapted to function with other, known process-related actions. For example, the present invention may be applied even if oxygen and carbon particles are added to the slag layer/melt in accordance with the prior art.

Carbon particles and dry ice particles may be introduced into the slag layer/melt using (a) common lance(s) (not shown). The size and velocity of the dry ice particles may also be adapted to produce the desired penetration depth and agitation in each individual case.

**Claims**

1. A method for creating/maintaining foam in a process, in particular a metallurgical process, comprising a melt of metal covered by a slag layer which is treated with gas and/or a solid in particle form,
   **characterised in that**
   dry ice ($CO_2$) is added to the slag layer/melt in particle form.

2. A method in accordance with claim 1,
   **characterised in that**
   the dry ice is added using a carrier gas.

3. A method in accordance with claim 2,
   **characterised in that**
   the carrier gas is carbon dioxide, air, nitrogen, oxygen or a mixture of these gases.

4. A method in accordance with claim 1,
   **characterised in that**
   the dry ice is added at a flat angle in relation to the slag layer/melt in order to create agitation.

5. A method in accordance with claim 1,
   **characterised in that**
   the dry ice is added virtually perpendicularly down towards the surface of the slag layer and is spread over the surface.

6. A method in accordance with claim 1,
   **characterised in that**
   the dry ice particles are added to the slag layer/melt in a size and at a velocity which produce the desired penetration and agitation in the slag layer/melt.

7. Equipment for creating/maintaining foam in a process, in particular a metallurgical process, comprising a melt of metal covered by a slag layer, which equipment comprises means for adding a solid to the slag layer/melt using a carrier gas via a lance which extends into the furnace,
   **characterised in that**
   the equipment comprises a store (12) for dry ice particles which is connected to the lance by means of an adjustable dosing device (14).

**8.** Equipment in accordance with claim 7,
**characterised in that**
the adjustable dosing device (14) comprises a feed screw.

**9.** Equipment in accordance with claim 7,
**characterised in that**
the flow cross-section of the lance is considerably greater than the projected area of the particles so that the particles leave the lance with a high degree of spread.

**Patentansprüche**

**1.** Verfahren zum Erzeugen/Aufrechterhalten von Schaum in einem Prozess, insbesondere einem metallurgischen Prozess, das eine Schmelze eines Metalls, bedeckt mit einer Schlackenschicht, die mit Gas und/oder einem Feststoff in Teilchenform behandelt wird, umfasst, **dadurch gekennzeichnet, dass** Trockeneis ($CO_2$) in Teilchenform zu der Schlackenschicht/Schmelze zugegeben wird.

**2.** Verfahren gemäß Anspruch 1, **dadurch gekennzeichnet, dass** das Trockeneis unter Verwendung eines Trägergases zugegeben wird.

**3.** Verfahren gemäß Anspruch 2, **dadurch gekennzeichnet, dass** das Trägergas Kohlendioxid, Luft, Stickstoff, Sauerstoff oder eine Mischung dieser Gase ist.

**4.** Verfahren gemäß Anspruch 1, **dadurch gekennzeichnet, dass** das Trockeneis unter einem flachen Winkel in Bezug auf die Schlackenschicht/Schmelze zugegeben wird, um Bewegung zu erzeugen.

**5.** Verfahren gemäß Anspruch 1, **dadurch gekennzeichnet, dass** das Trockeneis fast senkrecht nach unten in Richtung der Oberfläche der Schlackenschicht zugegeben wird und über die Oberfläche ausgebreitet wird.

**6.** Verfahren gemäß Anspruch 1, **dadurch gekennzeichnet, dass** die Trockeneisteilchen zu der Schlackenschicht/Schmelze in einer Größe und mit einer Geschwindigkeit, die die gewünschte Eindringung und Bewegung in der Schlackenschicht/Schmelze produzieren, zugegeben werden.

**7.** Ausrüstung zum Erzeugen/Aufrechterhalten von Schaum in einem Prozess, insbesondere einem metallurgischen Prozess, der eine Schmelze eines Metalls, bedeckt mit einer Schlackenschicht, umfasst, welche Ausrüstung Mittel zur Zugabe eines Feststoffes zu einer Schlackenschicht/Schmelze unter Verwendung eines Trägergases über eine Lanze, die sich in den Ofen erstreckt, umfasst, **dadurch gekennzeichnet, dass** die Ausrüstung ein Lager (12) für Trockeneisteilchen, das mit der Lanze mittels einer einstellbar Verschließeinheit (14) verbunden ist, umfasst.

**8.** Ausrüstung gemäß Anspruch 7, **dadurch gekennzeichnet, dass** die einstellbare Verschließeinheit (14) eine Zuführschnecke umfasst.

**9.** Ausrüstung gemäß Anspruch 7, **dadurch gekennzeichnet, dass** der Strömungsquerschnitt der Lanze beträchtlich größer als die projizierte Fläche der Teilchen ist, so dass die Teilchen die Lanze mit einem hohen Ausbreitungsgrad verlassen.

**Revendications**

**1.** Procédé de création/maintien de mousse dans un procédé, en particulier un procédé métallurgique, comprenant une masse fondue de métal couverte d'une couche de laitier qui est traitée avec un gaz et/ou un solide sous forme particulaire,
**caractérisé en ce que**
de la glace sèche ($CO_2$) est ajoutée à l'ensemble de la masse fondue et de la couche de laitier sous forme particulaire.

**2.** Procédé selon la revendication 1,

**caractérisé en ce que**

la glace sèche est ajoutée en utilisant un gaz véhiculaire.

3. Procédé selon la revendication 2,
   **caractérisé en ce que**

le gaz véhiculaire est le dioxyde de carbone, l'air, l'azote, l'oxygène ou un mélange de ces gaz.

4. Procédé selon la revendication 1,
   **caractérisé en ce que**

la glace sèche est ajoutée selon un angle plan par rapport à l'ensemble de la masse fondue et de la couche de laitier pour créer une certaine agitation.

5. Procédé selon la revendication 1,
   **caractérisé en ce que**

la glace sèche est ajoutée virtuellement perpendiculairement vers le bas en direction de la surface de la couche de laitier et est dispersée sur la surface.

6. Procédé selon la revendication 1,
   **caractérisé en ce que**

les particules de glace sèche sont ajoutées à l'ensemble de la masse fondue et de la couche de laitier dans une taille et à une vitesse qui produisent la pénétration et l'agitation souhaitées dans l'ensemble de la masse fondue et de la couche de laitier.

7. Equipement de création/maintien de mousse dans un procédé, en particulier un procédé métallurgique, comprenant une masse fondue de métal couverte d'une couche de laitier, ledit équipement comprenant des moyens d'addition d'un solide à l'ensemble de la masse fondue et de la couche de laitier en utilisant un gaz véhiculaire via une lance qui s'étend dans le four,
   **caractérisé en ce que**

l'équipement comprend un magasin (12) pour les particules de glace sèche qui est raccordé à la lance au moyen d'un dispositif doseur ajustable (14).

8. Equipement selon la revendication 7,
   **caractérisé en ce que**

le dispositif doseur ajustable (14) comprend une vis d'alimentation.

9. Equipement selon la revendication 7,
   **caractérisé en ce que**

la section transversale d'écoulement de la lance est considérablement supérieure à la surface projetée des particules de sorte que les particules quittent la lance avec un degré élevé de dispersion.

Fig. 1

Fig. 2